# EUROPEAN PATENT SPECIFICATION

(11) **EP 2 011 818 B1**
(45) Date of publication and mention of the grant of the patent: **06.11.2013**
(21) Application number: 07013212.1
(22) Date of filing: 05.07.2007
(51) Int. Cl.: C08J 9/00, C08J 9/04, C08J 9/06, C08J 9/08, C08L 23/00, C08L 23/06

(54) **Foamed thermoplastic product exhibiting superior fire properties**
Thermoplastisches Schaumprodukt mit hoher Feuerbeständigkeit
Produit thermoplastique en mousse offrant des propriétés ignifuges supérieures

(43) Date of publication of application: 07.01.2009
(73) Proprietor: Armacell Enterprise GmbH & Co. KG, 48153 Münster (DE)
(72) Inventor: Gräter, Horst, 48155 Münster (DE); Meller, Mika, 02880 Veikkola (FI); Kwasniak, Hanna, 59-241 Legnickie Pole (PL)
(74) Representative: Finck, Dieter

(56) References cited:
- WO-A-93/17859
- GB-A- 2 085 899
- JP-A- 2001 335 702

## Description

The invention relates to a foamed product made of a thermoplastic polymer and a blowing agent.

Insulation foam products may be extruded using any thermoplastic polymer having sufficient melt characteristics for physical foaming, such as polyethylene (LDPE, LLDPE, MDPE, HDPE, UHMWPE), polypropylene (HMS PP, PP random and block copolymers), olefinic block copolymers (OCB), thermoplastic elastomers (TPE), ethyl vinyl acetate (EVA), ethyl butyl acetate (EBA), ethyl methyl acetate (EMA), polyethylene terephtalate (PET), polybutylene terephtalate (PBT), or any other polymeric material having said characteristics.

Typically chemical blowing agents are used in the plastic processing in a way where the additive is exposed to an energy (typically high temperature) high enough to activate a chemical reaction at which a gaseous component(s) is (are) released. Upon exiting the extruder, this gaseous component expands rapidly and foaming is observed. The chemical blowing agent may be of endothermic or exothermic type. Endothermic agents require more energy for the reaction to take place, whereas exothermic agents release energy and speed up reaction rate.

Further, also physical blowing agents may be used for foaming (often referred to as "gas"). Typical physical blowing agents are hydrocarbons (such as isobutane, propane, pentane, methyl pentane), or alternatively also gases such as carbon dioxide (CO₂), nitrogen (N₂), or argon (Ar) for higher density applications.

The physical extrusion foaming process has been described in numerous patents.

A polyethylene insulation foam is widely used for pipe insulation and the fire properties are considered very important and the requirements vary from country to country and depend on application. The fire tests involve measurements of fire growth, extinguishing behavior and smoke development. Therefore flame retardants focus on reducing the growth of fire and amount and type of smoke, but unfortunately many fire suppressing additives increase the amount of smoke.

Typical flame retardant additives may contain the following compounds or combinations of said compounds: antimony trioxide, organobromines, organochlorines (chlorinated paraffin wax for example), magnesium hydroxide, aluminium hydroxide, red phosphorus , borates, nanocomposites (nanoclays and nanofibers).

GB 2 085 899 A discloses a foamed product made from a thermoplastic polymer which is treated with a flame-retardant composition. Said composition comprises as a flame retardant one or more materials selected from calcium carbonate, sodium bicarbonate and polyether polyols.

WO 93/17859 A discloses padding devices which may contain foams and which are not treated but filled with a flame-retardant composition containing boric oxide, bicarbonate of soda or epsom salts.

JP 2001 335702 A discloses the use of a flame retardant composition comprising sodium bicarbonates and a thermoplastic polymer.

It is the object of the invention to provide a foamed product of the generic kind which exhibits superior fire properties.

This object is achieved by a foamed product obtained from a thermoplastic polymer and a blowing agent, wherein the foamed product comprises an unreacted chemical blowing agent, which is selected from the group comprising citric acid and anhydrous monosodium citrate.

The chemical blowing agent remaining unreacted in the final product will react only in the case that the final product is subjected to an external energy, such as fire. The fire then activates the unreacted chemical blowing agent and the released gaseous substances act in decreasing the growth of fire as well as reduce the energy released in the fire. The latter takes place especially when endothermic chemical blowing agents are used.

Preferably the foamed product contains an additional conventional flame retardant additive.

It is convenient that the unreacted chemical blowing agent is present in the foamed product in a range of 0.5 to 10 % by weight and preferably in a range of 0.5 to 5 % by weight of the final product.

According to a preferred embodiment of the invention the foamed product consists of a core and of at least one outer layer, which, for instance, can be contained by core extrusion. In this case the unreacted chemical blowing agent can be contained in the outer layer only or in the outer layer and in the core.

The final product according to the invention provides in comparison with a conventional foamed product a lower inflaming temperature and a prolonged inflaming time. On fire there is a dissipation of heat, especially if the unreacted chemical blowing agent is an endothermic agent. Because of the fire there is a degradation resulting in an enlarged specific surface which exposes more and more of the conventional flame retardant additive resulting in lowering the temperature of the fire. The foamed product of the invention reliably fulfils the requirements of the German B 1 test.

The invention is further explained by the following example.

In this example a low density polyethylene-(LDPE)-isobutane mixture having an isobutane level of 10% is fed into a twinscrew extruder and mixed at carefully selected extruder temperatures. The mixture is then cooled in a Colombo type melt cooler and the mixture is fed into an extruder head at exactly a right temperature. The recipe was chosen similar to a typical insulation product. The polyethylene (Sabic 2602 THOO) was mixed with a traditional flame retardant based on Sb₂O₃ and chlorine, nucleating agent, and a diffusion modifier. Said foam was coated by post-extrusion with another type of LDPE (Sabic 1922T). The coating contained 2% of endothermic unreacted chemical blowing agent (citric acid) and 10% of traditional type of flame retardant (MgOH). After exposing this product to fire according to German B2 test (DIN 4102 part 2) it was observed that the fire immediately extinguished exhibiting rest length of over 10 cm. Typically a foam with a standard coating (also in presence of traditional flame retardant) continues burning leaving rest length in the range of 0 to 5 cm. Similar significant improvements were observed in the German B1 test.

## Claims

1. Foamed product obtained from a thermoplastic polymer and a blowing agent, **characterized in that** the foamed product comprises an unreacted chemical blowing agent, which is selected from the group comprising citric acid and anhydrous monosodium citrate.

2. Foamed product according to claim 1, **characterized in that** it contains a flame retardant additive.

3. Foamed product according to one of the preceding claims, **characterized in that** the unreacted chemical blowing agent is contained in an outer layer of the foamed product.

4. Foamed product according to claim 3, **characterized in that** the outer layer is coextruded with a core layer.

5. Foamed product according to one of claims 1 to 4, **characterized in that** the unreacted chemical blowing agent is present in a range of 0.5 to 10 % by weight of the final product.

6. Foamed product according to claim 5, **characterized in that** the unreacted chemical blowing agent is present in a range of 0.5 to 5 % by weight of the final product.

## Patentansprüche

1. Geschäumtes Erzeugnis, erhalten aus einem thermoplastischen Polymer und einem Treibmittel, **dadurch gekennzeichnet, dass** das geschäumte Erzeugnis ein nichtumgesetztes chemisches Treibmittel umfasst, ausgewählt aus der Gruppe, bestehend aus Citronensäure und wasserfreiem Mononatriumcitrat.

2. Geschäumtes Erzeugnis nach Anspruch 1, **dadurch gekennzeichnet, dass** es einen Flammverzögerungsmittelzusatz enthält.

3. Geschäumtes Erzeugnis nach einem der vorhergehenden Ansprüche, **dadurch gekennzeichnet, dass** das nichtumgesetzte chemische Treibmittel in einer Außenschicht des geschäumten Erzeugnisses enthalten ist.

4. Geschäumtes Erzeugnis nach Anspruch 3, **dadurch gekennzeichnet, dass** die Außenschicht mit einer Kernschicht coextrudiert wurde.

5. Geschäumtes Erzeugnis nach einem der Ansprüche 1 bis 4, **dadurch gekennzeichnet, dass** das nichtumgesetzte chemische Treibmittel in einer Menge von 0,5 bis 10 Gew.-% des Enderzeugnisses enthalten ist.

6. Geschäumtes Erzeugnis nach Anspruch , **dadurch gekennzeichnet, dass** das nichtumgesetzte chemische Treibmittel in einer Menge von 0,5 bis 5 Gew.-% des Enderzeugnisses enthalten ist.

## Revendications

1. Produit en mousse obtenu à partir d'un polymère thermoplastique et d'un agent gonflant, **caractérisé en ce que** le produit en mousse comprend un agent gonflant chimique n'ayant pas réagi, qui est choisi dans le groupe comprenant l'acide citrique et le citrate de monosodium anhydre.

2. Produit en mousse selon la revendication 1, **caractérisé en ce qu'**il contient un additif ignifuge.

3. Produit en mousse selon l'une des revendications précédentes, **caractérisé en ce que** l'agent gonflant chimique n'ayant pas réagi est contenu dans une couche extérieure du produit en mousse.

4. Produit en mousse selon la revendication 3, **caractérisé en ce que** la couche extérieure est co-extrudée avec une couche centrale.

5. Produit en mousse selon l'une des revendications 1 à 4, **caractérisé en ce que** l'agent gonflant chimique n'ayant pas réagi est présent dans une plage de 0,5 à 10 % en poids du produit final.

6. Produit en mousse selon la revendication 5, **caractérisé en ce que** l'agent gonflant chimique n'ayant pas réagi est présent dans une plage de 0,5 à 5 % en poids du produit final.
